# EUROPEAN PATENT APPLICATION

(11) **EP 4 403 026 A1**
(43) Date of publication of application: **24.07.2024**
(21) Application number: 22882795.2
(22) Date of filing: 17.10.2022
(51) Int. Cl.: A01K 13/00

(54) **ADJUSTABLE HAIR COMBING STRUCTURE**

(30) Priority: 18.10.2021 CN 202111210733
(71) Applicant: Shenzhen Jumao Universe Technology Co., Ltd, Shenzhen, Guangdong 518000 (CN)
(72) Inventor: TIAN, Youren, Zhangjiajie, Hunan 427000 (CN)
(74) Representative: Twelmeier Mommer & Partner
(86) International application number: PCT/CN2022/125627
(87) International publication number: WO 2023/066189

(57) **Abstract**

An adjustable grooming structure is disclosed, which relates to the field of pet grooming. The adjustable grooming structure includes a shell (801) and a plurality of grooming units (2) installed on the shell (801) for grooming a pet and collecting pet hair, the shell (801) is provided with a pathway for the pet to pass through, and an adjustment unit is arranged on the shell (801) to allow movement of the grooming units (2) towards or away from a center of the pathway. The grooming structure allows the adjustment of the size of the pathway through which a pet passes, and can achieve effective grooming.

## Description

### TECHNICAL FIELD

The present disclosure relates to the field of pet grooming, in particular to an adjustable grooming structure.

### BACKGROUND

Pets like cats and dogs tend to undergo significant hair shedding during specific seasons. Even in regular times, they can shed a considerable amount of hair, which attaches to various indoor objects and clings onto people, causing potential hygiene problems. Moreover, if pets accidentally consume their own hair, it can affect their digestion.

### SUMMARY

### Technical Problem

To address the aforementioned issue, it is common practice to install grooming devices with grooming structures along the paths where pets pass by. These grooming devices automatically comb the pets' hair and remove loose hair during their movement.

However, some existing grooming devices lack the ability to adjust the inner diameter, making them unsuitable for pets of various sizes. While a few grooming devices offer adjustable inner diameters, such as the automatic pet grooming device described in Patent Application No. CN111248097A, these devices rely on cylinder-based adjustments, which means that even after making adjustments, the inner diameter of the pathway remains fixed, restricting its usage to pets smaller than the size of the adjusted pathway.

When adjusting the inner diameter of the grooming device in the aforementioned technology, if the pathway is too small, pets cannot pass through smoothly, and even if they manage to pass through, their bodies will be compressed by the narrow pathway of the grooming device, causing pain and discomfort to the pets. Since pets are generally sensitive to pain and discomfort, they may become unwilling to pass through the grooming device in the future, making the grooming device ineffective for its intended purpose. Therefore, the pathway is usually adjusted to be larger than the size of the pet's body, enabling the pet to pass through smoothly. However, in such cases, the grooming structures inside the grooming device cannot make contact with the pet's body or only exert minimal pressure, resulting in an inadequate combing force that fails to remove loose hair from the pet's coat.

### Solutions to problems

### Technical solution

The present disclosure is intended to provide an adjustable grooming structure for pets, with the ability to adjust the size of the pathway through which pets pass.

To achieve the above objective, the present disclosure adopts the following technical scheme: an adjustable grooming structure comprises a shell and a plurality of grooming units installed on the shell for grooming a pet and collecting pet hair, the shell is provided with a pathway for the pet to pass through, and an adjustment unit is arranged on the shell to allow movement of the grooming units towards or away from a center of the pathway.

The principle and advantages of this scheme are as follows.
1. In practical application, the adjustable grooming structure is installed at a spot where pets enter and exit, such as the entrance of a cat litter box. As the pet passes through the pathway in the shell, the grooming units automatically comb the hair of the pet, eliminating the need for the owner to groom the pet personally. Additionally, the grooming units also collect the shed hair from the pet, preventing it from scattering everywhere and avoiding health issues of the pet caused by excessive hair ingestion, such as hairballs, while maintaining the cleanliness of the indoor environment.
2. The adjustment unit is provided to allow movement of the grooming units towards or away from the center of the pathway. This enables the grooming units to be adjusted according to the body size of the pet, so as to effectively groom the pet and expand the applicability of the grooming structure in this scheme.

Optionally, as an improvement, the adjustment unit includes a cam plate, the cam plate is provided with working curves matched with the grooming units, and the grooming units abut against the working curves on the cam plate.

In this scheme, the working curves on the cam plate abut against the grooming units, and when the cam plate is driven to rotate, the working curves on the cam plate push the grooming units, making the grooming units move away from or towards the center of the pathway in the shell. By adjusting the relative positions between the grooming units and the center of the pathway, the grooming units can adapt to pets of different body sizes.

Because the grooming units in this scheme abut against the working curves on the cam plate, the working curves on the cam plate can restrict the lower limit position of the grooming units, providing a unilateral limit. That is, after the working curves on the cam plate adjust the distance between the grooming units and the center of the pathway, the cam plate stops rotating, and at this point, the working curves on the cam plate limit the position of the grooming units, preventing the grooming units from moving towards the center of the pathway; and when the pet passes through the pathway and makes contact with the grooming units, the pet itself can push the grooming units to extend away from the pathway, so the inner diameter of the pathway can be made to be smaller than the body size of the pet during grooming unit position adjustment. After the lower limit position of the grooming units is well adjusted, the grooming units can fit well to the body of the pet when the pet passes through the pathway in the shell and comes into contact with the grooming units, providing greater force during the hair removal process. This ensures that the grooming units can effectively groom the pet.

As the working curves of the cam plate only limit the movement of the grooming units towards the center of the pathway and the grooming units can still expand outwards, when the pet passes through the pathway in the shell, it can push the grooming units outwards and pass smoothly, without experiencing any discomfort or pain caused by compression. This prevents the situation where the pet is unwilling to go through the grooming structure again.

In this scheme, the distance between the grooming units and the center of the pathway can be adjusted to accommodate pets of different body sizes. It can easily expand or contract, allowing pets with diverse body types to pass through effortlessly. As the pet passes through, the inner diameter of the pathway can automatically change to adapt to the body size of the pet, eliminating the need for frequent pathway size adjustments. This makes it more convenient and practical.

Optionally, as an improvement, the plurality of grooming units are provided to be distributed on one side of the pathway of the shell.

The arrangement of the plurality of grooming units in this scheme can expand the scope of pet grooming and effectively improve the grooming effect on pets.

Optionally, as an improvement, elastic members are arranged between the grooming units and the shell.

In this scheme, due to the arrangement of the elastic members between the grooming units and the shell, when the pet passes through the pathway and exerts pressure on the grooming units, a better fit is generated between the grooming units and the body of the pet under the restriction of the elastic members, and a certain amount of pressure is created between the grooming units and the pet, enabling the grooming units to effectively groom and remove hair from the body of the pet. Further, under the action of the elastic members, the grooming units can return to the original position after the pet passes through the pathway, facilitating effective grooming and hair removal for the pet when it passes through the pathway again.

Optionally, as an improvement, the shell is hollow, and there are two groups of grooming units respectively located on two sides of the shell.

This arrangement allows the grooming units on the two sides of the shell to groom the pet more times on a larger area. As a result, as the pet passes through, it is groomed twice.

Optionally, as an improvement, the two groups of grooming units on the two sides of shell are arranged in a staggered manner.

On one hand, the grooming units can be adjusted to move closer to each other. On the other hand, when the pet passes through the grooming units, it pushes the grooming units to expand outwards, enlarging the diameter through which the pet passes. This causes the grooming units on the same side to move away from each other, creating gaps. As a result, the grooming units cannot groom the entire circumference of the body of the pet, leaving some areas missed. In this scheme, the two groups of grooming units are arranged in a staggered manner, compensating for the space between the adjacent grooming units. This ensures more thorough grooming coverage on the pet, resulting in better grooming effects and ensuring that most parts of the body of the pet are groomed.

Optionally, as an improvement, a driving unit for driving the adjustment unit to rotate is further included. The driving unit includes a worm wheel, a worm and a motor, the motor is configured to drive the worm to rotate, the worm wheel is meshed with the worm, and the worm wheel is connected to the cam plate.

In this scheme, the worm and worm wheel mechanism drive the adjustment unit to rotate, realizing a higher level of automation.

Optionally, as an improvement, each of the grooming units includes a collecting box and a grooming roller, two ends of the collecting box are provided with openings, and the grooming roller is rotatably arranged in one of the openings of the collecting box; and the grooming roller is provided with a plurality of dehairing brushes along its circumference, hair removal brushes are arranged in the collecting box, and the dehairing brushes and the hair removal brushes are enabled to make contact by rotating the grooming roller.

In this way, when the pet passes over the grooming rollers, the dehairing brushes on the grooming rollers remove the shed hair from the body of the pet, realizing automatic grooming and hair removal. Additionally, as the grooming rollers rotate, the dehairing brushes on the grooming rollers and the hair removal brushes come into frictional contact, effectively clearing the hair from the dehairing brushes. Then the hair detached from the dehairing brushes enters the collecting boxes. This ensures a maximal grooming and hair removal function of the dehairing brushes.

Optionally, as an improvement, an outer side of the grooming roller is connected to a baffle in its axial direction.

In this scheme, when the pet passes over the grooming roller, it triggers the baffle arranged on the grooming roller to drive the grooming roller to move. Moreover, the baffle can prevent the hair of the pet from getting tangled on the grooming roller, especially in cases where the pet has long hair. When the pet sheds long hair, the baffle acts as a barrier, isolating the dehairing brushes on two sides and preventing the long hair from extending from the dehairing brushes located on one side of the baffle to the dehairing brushes located on the other side, thus avoiding any knots or tangles on the grooming roller.

Optionally, as an improvement, the grooming roller is connected to plates of comb teeth, a plurality of comb teeth bent to the same side are connected to each of the plates of comb teeth, and the comb teeth are elastic.

This arrangement allows the plates of comb teeth to groom and smoothen the hair of the pet as the pet passes over the grooming roller. This helps minimize hair tangling issues and also facilitates the collection of shed hair from the body of the pet.

When the hair of the pet, which remains on its body, is knotted, the knots can easily get stuck on the comb teeth when the pet passes by the grooming roller, causing obstruction in the movement and resulting in pain when the hair is pulled. This will make the pet unwilling to go through the grooming roller again. However, in this scheme, the comb teeth are elastic, so when encountering the above situation, the tangled hair on the pet can still easily pass through the comb teeth. After the pet passes through the grooming roller, the tangled hair can pull the comb teeth and deform them, allowing smooth passage and preventing direct pulling of the tangled hair from the comb teeth, thereby avoiding pain for the pet.

### BRIEF DESCRIPTION OF DRAWINGS

FIG. 1 is a perspective view of an adjustable grooming structure according to Embodiment I of the present disclosure.
FIG. 2 is a front view of the connection between a driving unit and a cam plate in the adjustable grooming structure according to Embodiment I of the present disclosure.
FIG. 3 is a rear view of the connection between the driving unit and the cam plate in the adjustable grooming structure according to Embodiment I of the present disclosure.
FIG. 4 is a perspective view of the adjustable grooming structure after an upper cover is connected to a first slide plate and a second slide plate according to Embodiment I of the present disclosure.
FIG. 5 is a perspective view of a grooming unit in the adjustable grooming structure according to Embodiment I of the present disclosure.
FIG. 6 is a front view of a first slide plate and a driving unit in the adjustable grooming structure according to Embodiment I of the present disclosure.
FIG. 7 is an exploded view of a collecting box, a base and a grooming roller in the grooming unit of the adjustable grooming structure according to Embodiment I of the present disclosure.
FIG. 8 is an exploded view, from another angle, of the collecting box, the base and the grooming roller in the grooming unit of the adjustable grooming structure according to Embodiment I of the present disclosure.
FIG. 9 is a perspective view of a grooming roller in an adjustable grooming structure according to Embodiment II of the present disclosure.
FIG. 10 is a perspective view of a grooming roller in an adjustable grooming structure according to Embodiment III of the present disclosure.
FIG. 11 is a front view of the connection between a driving unit and a cam plate in an adjustable grooming structure according to Embodiment IV of the present disclosure.

### DETAILED DESCRIPTION

The present disclosure will be described in further detail by specific implementations.

Description of reference numerals: upper cover 1, grooming unit 2, collecting box 3, grooming roller 4, limit plate 5, guide block 6, guide plate 7, shell 801, first slide plate 8, second slide plate 9, motor 10, worm 11, worm wheel 12, cam plate 13, connecting plate 14, working curve 15, guide hole 16, rotating block 17, reset member 18, dehairing brush 19, positioning shaft 20, mounting block 21, limit block 22, hair removal brush 23, baffle 24, comb tooth 25, mounting groove 26 and base 27.

### Embodiment I

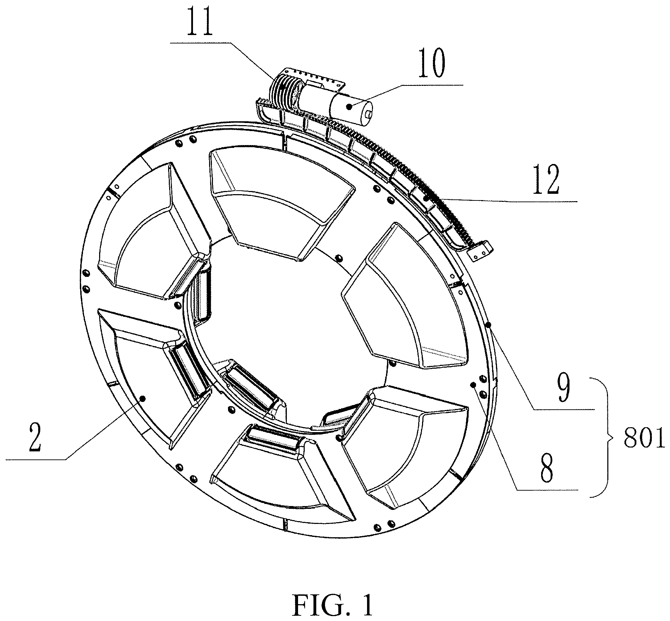

As shown in FIGS. 1, 2 and 3, an adjustable grooming structure includes a shell 801 and a plurality of grooming units 2 installed on the shell 801 for grooming a pet and collecting pet hair, the shell 801 is provided with a pathway for the pet to pass through, and an adjustment unit is arranged on the shell 801 to allow movement of the grooming units 2 towards or away from a center of the pathway.

In this embodiment, the plurality of grooming units 2 are provided to be distributed on one side of the pathway of the shell 801. The shell 801 is hollow, and there are two groups of grooming units 2 respectively located on two sides of the shell 801, with each group consisting of six grooming units. The six grooming units 2 in each group are evenly distributed in a circumferential direction of the shell 801, forming the pathway for the pet to pass through.

In this embodiment, the two groups of grooming units 2 on the two sides of shell 801 are arranged in a staggered manner. Specifically, the two groups of grooming units 2 are staggered by 25-35 degrees. In this embodiment, there is a 30-degree stagger between the two groups of grooming units 2. This arrangement allows the grooming units 2 to groom the pet more thoroughly and comprehensively, effectively ensuring that most parts of the pet body can be groomed.

In this embodiment, the shell 801 includes a first slide plate 8 and a second slide plate 9, and the two groups of grooming units 2 are evenly distributed on the first slide plate 8 and the second slide plate 9 respectively in a circumferential direction. In this embodiment, the two groups of grooming units 2 are in radial sliding fit with the first slide plate 8 and the second slide plate 9 respectively.

The first slide plate 8 and the second slide plate 9 are connected. In this embodiment, the first slide plate 8 and the second slide plate 9 are fastened and then fixed by screws, and a receiving space is formed between the first slide plate 8 and the second slide plate 9.

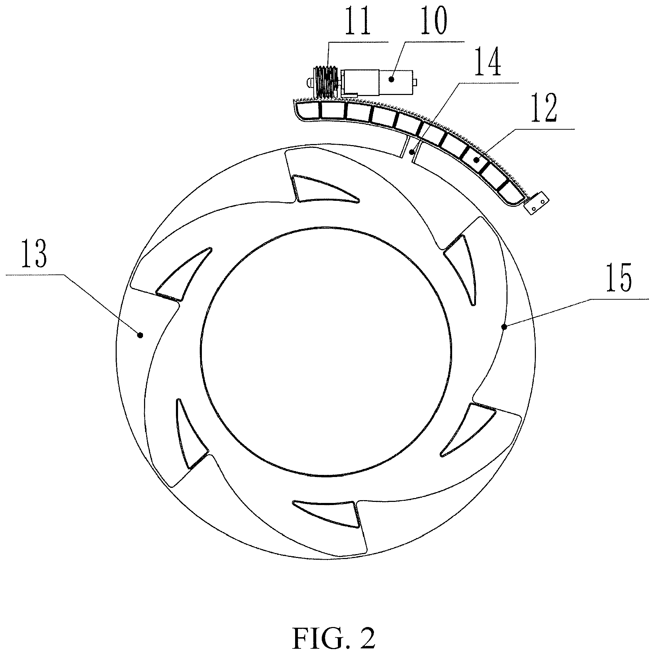

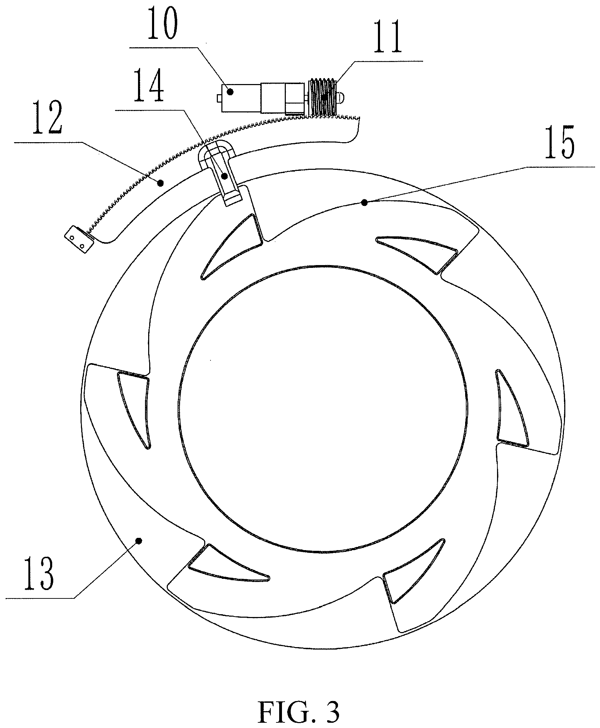

As shown in FIGS. 2 and 3, the adjustment unit includes a cam plate 13, the cam plate 13 is provided with working curves 15 matched with the grooming units, and a center of the cam plate 13 is provided with a through hole, allowing the pet to pass through. The grooming units 2 abut against the working curves 15 on the cam plate 13. In this embodiment, front and back ends of the cam plate 13 are each provided with six working curves 15. The grooming units 2 on the two sides of the shell 801 respectively abut against the six working curves 15 on the front end of the cam plate 13 and the six working curves 15 on the back end of the cam plate 13. The working curves 15 on the front end and back end of the cam plate 13 are oriented in opposite directions. In this embodiment, the working curves 15 on the cam plate 13 are all involute curves. The cam plate 13 in this embodiment is located in the cavity between the first slide plate 8 and the second slide plate 9.

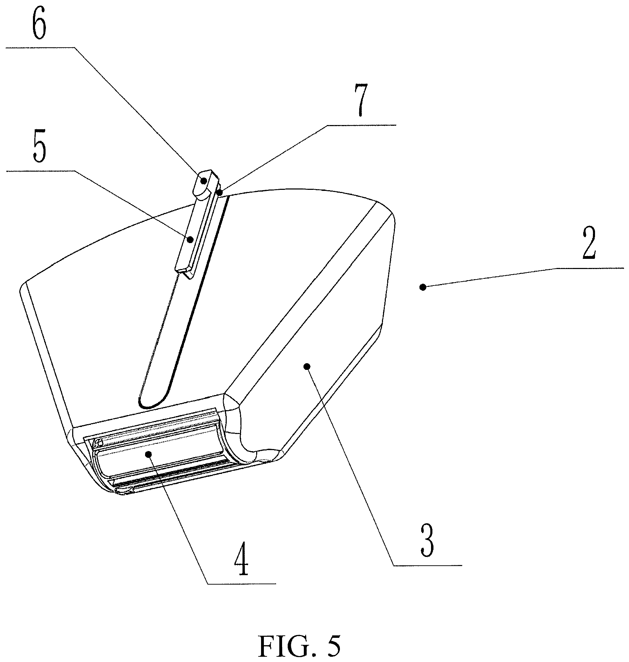

As shown in FIG. 5, each of the grooming units 2 includes a collecting box 3 and a grooming roller 4. The collecting box 3 is fan-shaped, and two ends of the collecting box 3 are provided with openings. The grooming roller 4 is rotatably arranged in one of the openings of the collecting box 3. In this embodiment, the grooming roller 4 is installed on a side, with a narrower opening, of the collecting box 3. A guide plate 7 is fixedly connected to one end face of the collecting box 3, and a limit plate 5 is fixedly connected to an end, away from the collecting box 3, of the guide plate 7. Both the limit plate 5 and the guide plate 7 are rectangular plates, and the width of the limit plate 5 is greater than that of the guide plate 7. A guide block 6 is fixedly connected to an upper part of the limit plate 5.

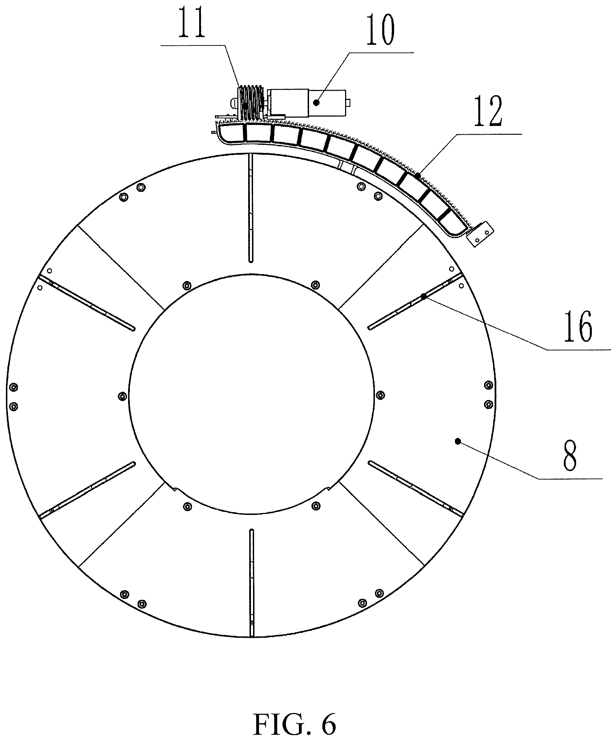

As shown in FIG. 6, the first slide plate 8 is provided with six guide holes 16, all of which are strip-shaped holes, and the six guide holes 16 are evenly distributed in the circumferential direction of the first slide plate 8. An end, away from a center of the first slide plate 8, of each of the six guide holes 16 runs through a side wall of the first slide plate 8. In this embodiment, the second slide plate 9 is also provided with six evenly distributed guide holes 16, and an end, away from a center of the second slide plate 9, of each of the guide holes 16 in the second slide plate 9 runs through a side wall of the second slide plate 9.

The guide plates 7 on the collecting boxes 3 can pass through the guide holes 16, but the limit plates 5 cannot pass through the guide holes 16. In this way, the collecting box 3 and the limit plate 5 are respectively located on two sides of the first slide plate 8 or the second slide plate 9 during the process of assembling the grooming unit 2 on the first slide plate 8 or the second slide plate 9, providing optimal limiting effect on the collecting box 3 and ensuring a stable sliding process of the collecting box 3 along the first slide plate 8 or the second slide plate 9.

In the process of installing the collecting boxes 3, the guide plates 7 are inserted into the guide holes 16, such that the collecting boxes 3, the limit plates 5 and the guide blocks 6 are located on the two sides of the first slide plate 8 or the second slide plate 9, and the guide blocks 6 on the plurality of collecting boxes 3 are correspondingly located on the working curves 15 of the cam plate 13 and abut against the working curves 15 of the cam plate 13 respectively.

Elastic members are arranged between the grooming units 2 and the shell 801. Specifically, in this embodiment, the elastic members are arranged between the grooming units 2 in one group and the first slide plate 8 and between the grooming units 2 in another group and the second slide plate 9. Here, the elastic members are constant force springs (not shown in the figure).

In this embodiment, a circumference of the first slide plate 8 and a circumference of the second slide plate 9 are each evenly provided with six grooves (not shown in the figure) for installing the constant force springs, and one end of the constant force spring is hooked on the guide block 6. When the grooming units 2 on the first slide plate 8 and the second slide plate 9 are located at lower limits of the working curves 15 of the cam plate 13, that is, the grooming unit 2 is located at a position, closest to the center of the pathway in the shell, on the working curve 15 of the cam plate 13, the inner diameter of the pathway formed between the grooming units 2 is the smallest, and the constant force spring is in an unstretched natural state. Due to the arrangement of the constant force springs, after the inner diameter of the pathway formed between the grooming units 2 is adjusted, the grooming units 2 can automatically return to the original state after expanding outwards under the pushing of the pet, facilitating effective grooming on the pet during their next passage. Moreover, the arrangement of the elastic members ensures a better fit between the grooming units 2 and the body of the pet, resulting in improved grooming force and enhancing the overall grooming effectiveness.

As shown in FIG. 2, the adjustable grooming structure in this embodiment further includes a driving unit for driving the adjustment unit to rotate. The driving unit includes a worm wheel 12, a worm 11, a motor 10 and a reducer, where the motor 10 drives the worm 11 to rotate, and the power of the motor 10 is transmitted to the worm 11 after being decelerated by the reducer, so as to make the worm 11 rotate; and the worm wheel 12 meshes with the worm 11, and the worm wheel 12 is fixedly connected to the cam plate 13. In this embodiment, the worm wheel 12 is an incomplete worm wheel 12, and the arc length of the worm wheel 12 is one sixth of a whole circle. This arrangement can effectively utilize the effective number of teeth of the worm wheel 12 to ensure its rotation which drives the adjustment unit to rotate, while reducing the volume of the worm wheel 12.

A connecting plate 14 is fixedly connected between an inner side of the worm wheel 12 and the cam plate 13, and the cam plate 13 can be driven to rotate when the worm wheel 12 rotates.

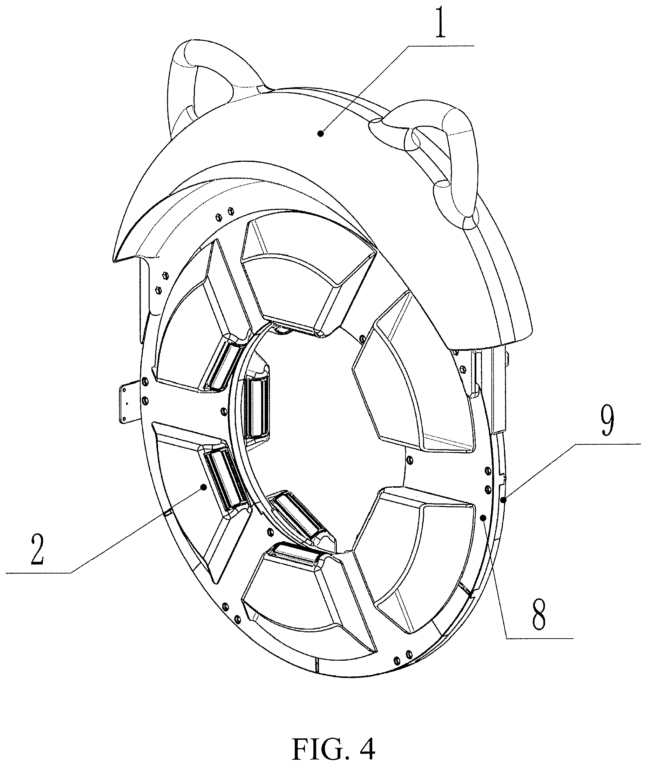

As shown in FIG. 4, in this embodiment, an upper cover 1 is connected to top ends of the first slide plate 8 and the second slide plate 9 by screws, and upper parts of the first slide plate 8 and the second slide plate 9 are located in the upper cover 1. The arrangement of the upper cover 1 facilitates the installation of the motor 10, the reducer and the worm 11 and can shield the driving unit, enhancing safety and aesthetics.

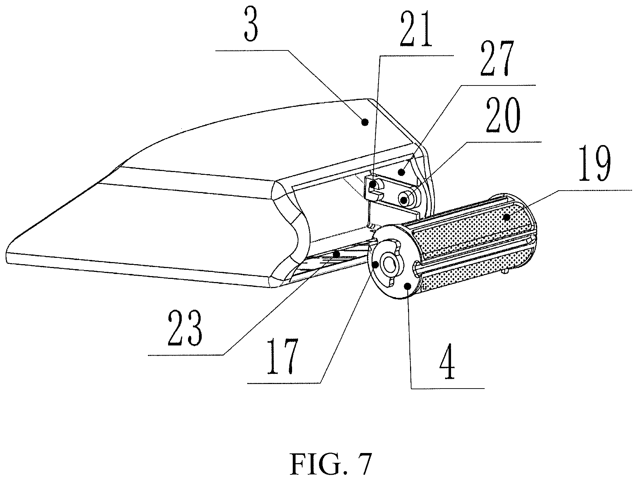

As shown in FIG. 7, the grooming roller 4 is provided with a plurality of dehairing brushes 19 along its circumference, hair removal brushes 23 are arranged in the collecting box 3, and the dehairing brushes 19 and the hair removal brushes 23 can make contact by rotating the grooming roller 4. In this embodiment, a base 27 is connected in the collecting box 3, the base 27 is a hollow box, and the grooming roller 4 is rotatably connected in the base 27. In this embodiment, an outer side of the grooming roller 4 is provided with four grooves along its circumference, there are four dehairing brushes 19, and the four dehairing brushes 19 are respectively bonded in the four grooves, thus realizing the assembly and connection of the dehairing brushes 19 and the grooming roller 4. The dehairing brush 19 includes a brush cloth and bristles, and the brush cloth is covered with the bristles.

Two hair removal brushes 23 are arranged in each collecting box 3. In this embodiment, the two hair removal brushes 23 are respectively connected to two side walls in the base 27. In this embodiment, the hair removal brush 23 includes a hair removal cloth and a plurality of bristles, and the hair removal cloth is covered with the plurality of bristles. The dehairing brushes 19 can make contact with the hair removal brushes 23 by rotating the grooming roller 4, allowing the bristles of the dehairing brushes 19 to rub against the bristles of the hair removal brushes 23, thus effectively removing the pet hair adhering to the dehairing brushes 19.

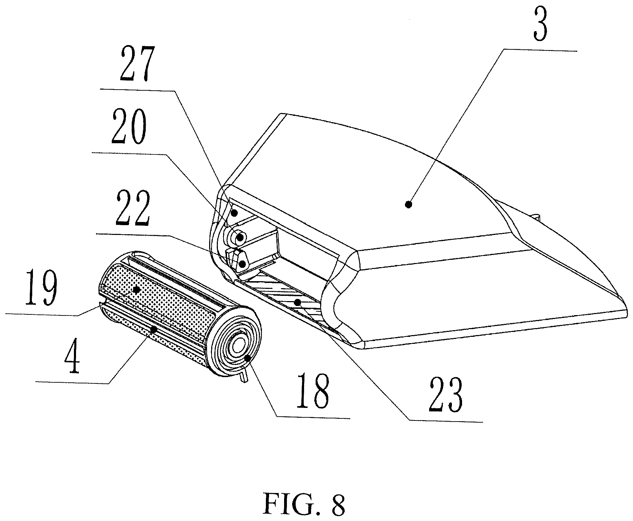

As shown in FIG. 8, a limit structure for limiting the rotation range of the grooming roller 4 is arranged between the grooming roller 4 and the base 27, and a reset member 18 is arranged between the grooming roller 4 and the base 27.

In this embodiment, positioning shafts 20 are fixedly connected to two inner side walls of the base 27, the two positioning shafts 20 are symmetrically arranged, and the two positioning shafts 20 are located on the two inner side walls, not connected with the hair removal brushes 23, of the base 27.

As shown in FIGS. 7 and 8, the limit structure includes a limit block 22 arranged on the inner side of the base 27 and a rotating block 17 arranged at one end of the grooming roller 4. The reciprocating rotation of the grooming roller 4 can make two ends of the rotating block 17 abut against two symmetrical ends of the limit block 22 respectively. In this embodiment, the limit block 22 is cam-shaped, two sides of the limit block 22 are symmetrical inclined planes, the limit block 22 is located at one side of one of the two positioning shafts 20, a mounting block 21 is fixedly connected to one side of the other positioning shaft 20, and the mounting block 21 is provided with a U-shaped groove. In this embodiment, the limit block 22 is fixedly connected to the base 27 through adhesive bonding, screw fixation, or integral molding.

In this embodiment, the rotating block 17 is coaxially and fixedly connected to the grooming roller 4, and a center of the rotating block 17 is provided with a shaft hole, such that the positioning shaft 20 can be easily inserted into the shaft hole of the rotating block 17 to realize rotating fit. The rotating block 17 in this embodiment has a semicircular shape.

As shown in FIG. 8, the reset member 18 in this embodiment is a constant force spring. During installation, the rotating block 17 and the constant force spring respectively located at two ends of the grooming roller 4 are displaced onto the two positioning shafts 20 in the base 27 respectively, and an end of the reset member 18 is inserted into the groove of the mounting block 2113, thus realizing the purpose of connecting the grooming roller 4 with the base 27 and allowing the reset member 18 to be reset after deformation.

In actual use, when the pet passes over the grooming roller 4 and makes the grooming roller 4 rotate, the grooming roller 4 can be reset under the action of the reset member 18, such that the grooming roller 4 returns to the initial state for further grooming and hair removal. In this embodiment, due to the arrangement of the limit structure, when the two ends of the rotating block 17 abut against the two sides of the limit block 22 respectively, the rotation of the grooming roller 4 is blocked, so as to effectively limit the rotation range of the grooming roller 4 for both forward rotation and reverse rotation. In addition, when the pet passes through the grooming units 2, the dehairing brushes 19 on the grooming roller 4 can groom the pet, and at the same time, the grooming roller 4 rotates, allowing the hair removal brushes 23 to come into contact with the dehairing brushes 19, so as to automatically remove the hair from the grooming roller 4.

The specific implementation process is as follows. The motor 10 drives the worm 11 to rotate, and then the worm 11 drives the worm wheel 12 meshing therewith to rotate. Because the worm wheel 12 is connected to the cam plate 13, the rotating worm wheel 12 will drive the cam plate 13 to rotate. During the rotation of the cam plate 13, the working curves 15 on the cam plate 13 push the guide blocks 6 on the collecting boxes 3. At the same time, the collecting boxes 3 on the first slide plate 8 and the collecting boxes 3 on the second slide plate 9 slide towards the center of the pathway of the shell along a radial direction of the first slide plate 8 and the second slide plate 9 respectively. When the guide block 6 is located at the lowest position of the working curve 15 on the cam plate 13 (i.e., the position closest to the center of the cam plate 13), the inner diameter of the pathway formed between the six grooming units 2 on the first slide plate 8 and the six grooming units 2 on the second slide plate 9 is the smallest, which is smaller than the body size of most pets.

In the actual adjustment process, according to the body size of the pet, the guide block 6 is located at an appropriate position of the working curve 15 on the cam plate 13, such that the inner diameter of the pathway formed between the plurality of grooming units 2 can allow the pet to pass through. The inner diameter of the pathway can be appropriately adjusted to be smaller than the body size of the pet during the adjustment process.

The working curve 15 on the cam plate 13 has a unilateral limiting effect on the collecting box 3, that is, after the position of the collecting box 3 is adjusted, it can only limit the movement of the collecting box 3 towards the center of the pathway in the shell, but cannot limit the outward expansion of the collecting box 3. Therefore, after the cam plate 13 stops rotating, there is still a large space for the grooming units 2 to expand outwards along the first slide plate 8 and the second slide plate 9, and the plurality of grooming units 2 can no longer retract inwards, but only expand outwards under the external pushing force. As a result, automatic adjustment based on the body size of the pet can be achieved. When the pet passes through the pathway, the grooming units 2 are pushed outwards to increase the inner diameter of the pathway formed between the plurality of grooming units 2, allowing for smooth passage. Thus, in this embodiment, when adjusting the positions of the grooming units 2, the pathway formed between the grooming units 2 can be slightly smaller than the body size of the pet, as the pet can still pass smoothly in this case. The inner diameter of the pathway formed between the grooming units 2 can freely change during the pet's passage without causing any squeezing or painful sensation to the pet.

The working curves 15 on the cam plate 13 in this embodiment can limit the extent to which the grooming units 2 rebound to the middle under the action of the elastic members.

When the pet passes through the pathway formed between the grooming units 2, the grooming rollers 4 on the collecting boxes 3 groom the pet; and when the pet passes through the pathway reversely, the grooming rollers 4 groom the pet again, and at the same time, the grooming rollers 4 rotate reversely when the pet passes through. During the reverse rotation of the grooming rollers 4, they come into frictional contact with the hair removal brushes 23 on the base 27, thereby brushing off the hair left on the grooming rollers 4 from the previous passage, which is then collected in the collecting boxes 3.

In this scheme, the elastic members are arranged between the collecting boxes 3 and the first slide plate 8. Under the restriction of the elastic members, the pet pushes the grooming units 2 outwards when passing through the pathway formed by the grooming units 2, such that the grooming units 2 can be in contact with the body of the pet. This creates a certain amount of pressure between the grooming units 2 and the pet, enabling the grooming units 2 to effectively groom and remove hair from the body of the pet with a certain level of force. Further, under the action of the elastic members, the grooming units 2 can return to the well-adjusted position after the pet passes through the pathway formed by the grooming units 2, facilitating effective grooming and hair removal for the pet when it passes through the pathway again.

### Embodiment II

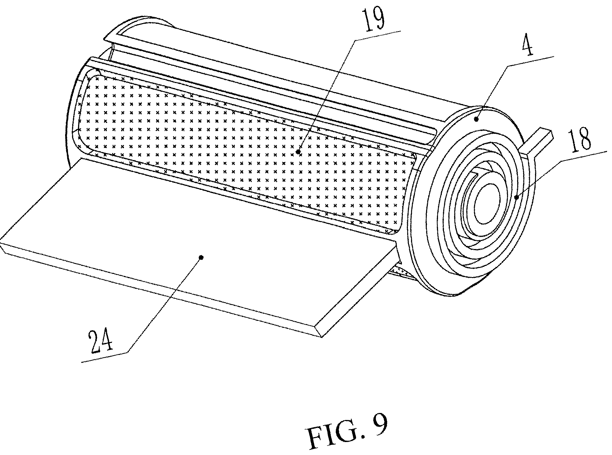

As shown in FIG. 9, an adjustable grooming structure is different from the Embodiment I in that: an outer side of the grooming roller 4 is connected to a baffle 24 in its axial direction. The baffle 24 is made of a material that can be elastically deformed. In this embodiment, the baffle 24 is made of silica gel, and the baffle 24 is a rectangular sheet. The baffle 24 is bonded to the grooming roller 4.

The specific implementation process is as follows. When the pet comes into contact with the grooming roller 4 as it passes through the pathway reversely, the dehairing brushes 19 located on the other side of the baffle 24 groom the pet and remove hair from the pet again. In this way, during the repeated passage of the pet through the grooming roller 4, the dehairing brushes 19 on the two sides of the baffle 24 and the hair removal brushes 23 on the two sides of the base 27 work in coordination to effectively remove the hair adhering to the dehairing brushes 19 along with the forward and reverse rotation of the grooming roller 4.

In addition, due to the arrangement of the baffle 24 in this embodiment, the grooming roller 4 is driven by the baffle 24 to rotate when the pet passes through the grooming roller 4. That is, the baffle 24 provides an auxiliary effect in the rotation of the grooming roller 4. Further, the baffle 24 can prevent the hair of the pet from getting tangled on the grooming roller 4, especially in cases where the pet has long hair. When the pet sheds long hair, the baffle 24 acts as a barrier, isolating the dehairing brushes 19 on two sides and preventing the long hair from extending from the dehairing brushes 19 located on one side of the baffle 24 to the dehairing brushes 19 located on the other side, thus avoiding any knots or tangles on the grooming roller 4.

### Embodiment III

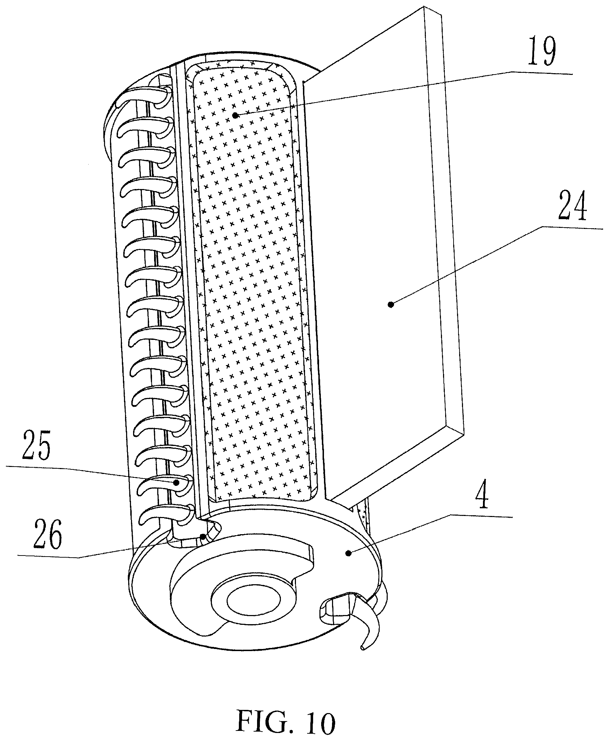

As shown in FIG. 10, an adjustable grooming structure is different from the Embodiment II in that: the grooming roller 4 is connected to plates of comb teeth 25, a plurality of comb teeth 25 bent to the same side are connected to the plates of comb teeth 25, and the plurality of comb teeth 25 are distributed at intervals.

The comb teeth 25 are bent away from the baffle 24. This allows for a reverse grooming action on the pet, resulting in a more effective grooming effect. In this embodiment, two plates of comb teeth 25 are provided, each located on one side of the baffle 24. This arrangement allows for grooming and hair removal of the pet in both forward and reverse movements of the pet through the grooming roller 4.

In this embodiment, the plates of comb teeth 25 are detachably connected to the grooming roller 4. Specifically, mounting grooves 26 are formed in the axial direction of the grooming roller 4, and one end of each of the mounting grooves 26 runs through one end of the grooming roller 4. Once the plates of comb teeth 25 are fit into the mounting grooves 26, the assembly of the plates of comb teeth 25 and the grooming roller 4 is realized. This method is more convenient and allows for easy replacement.

In this embodiment, the comb teeth 25 are elastic and can be deformed. In this embodiment, the comb teeth 25 are made of a flexible material, specifically a 90A low-hardness material made of ABC resin.

When the hair of the pet, which remains on its body, is knotted, the knots can easily get stuck on the comb teeth 25 when the pet passes by the grooming roller 4, causing obstruction in the movement and resulting in pain when the hair is pulled. This will make the pet unwilling to go through the grooming roller 4 again. However, in this embodiment, the comb teeth 25 are elastic and can be deformed, so when encountering the above situation, the tangled hair on the pet can still easily pass through the comb teeth 25. After the pet passes through the grooming roller 4, the tangled hair can pull the comb teeth 25 and deform them, allowing smooth passage and preventing direct pulling of the tangled hair from the comb teeth 25, thereby avoiding pain for the pet.

### Embodiment IV

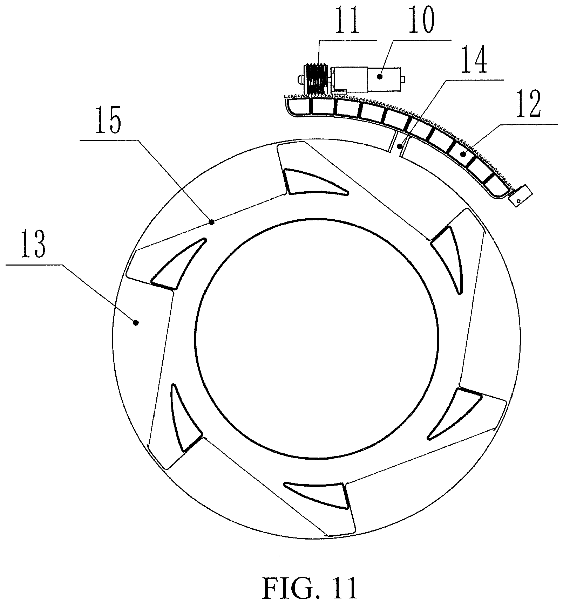

As shown in FIG. 11, an adjustable grooming structure is different from the Embodiment I in that: the working curves 15 on the cam plate 13 are oblique lines. In this embodiment, the working curves on the cam plate 13 are in a different shape, which can also realize position adjustment of the grooming units 2 and have a unilateral limiting effect on the grooming units 2.

What have been described above are only embodiments of the present disclosure, and common sense such as specific technical scheme and/or characteristics well known in the scheme is not described here. It should be pointed out that for those of ordinary skills in the art, several modifications and improvements can be made without departing from the technical scheme of the present disclosure, which should also be regarded as the protection scope of the present disclosure, and these will not affect the implementation effect of the present disclosure and the practicability of the patent. The scope of protection claimed in this application shall be subject to the contents of the claims, and the specific implementation in the specification can be used to explain the contents of the claims.

## Claims

1. An adjustable grooming structure, comprising: a shell and a plurality of grooming units installed on the shell for grooming a pet and collecting pet hair, wherein the shell is provided with a pathway for the pet to pass through, and an adjustment unit is arranged on the shell to allow movement of the grooming units towards or away from a center of the pathway.

2. The adjustable grooming structure of claim 1, wherein the adjustment unit comprises a cam plate, the cam plate is provided with working curves matched with the grooming units, and the grooming units abut against the working curves on the cam plate.

3. The adjustable grooming structure of claim 1, wherein the plurality of grooming units are provided to be distributed on one side of the pathway of the shell.

4. The adjustable grooming structure of claim 3, wherein elastic members are arranged between the grooming units and the shell.

5. The adjustable grooming structure of claim 1, wherein the shell is hollow, and there are two groups of grooming units respectively located on two sides of the shell.

6. The adjustable grooming structure of claim 5, wherein the two groups of grooming units on the two sides of shell are arranged in a staggered manner.

7. The adjustable grooming structure of claim 2, further comprising a driving unit for driving the adjustment unit to rotate, wherein the driving unit comprises a worm wheel, a worm and a motor, the motor is configured to drive the worm to rotate, the worm wheel is meshed with the worm, and the worm wheel is connected to the cam plate.

8. The adjustable grooming structure of claim 1, wherein each of the grooming units comprises a collecting box and a grooming roller, two ends of the collecting box are provided with openings, and the grooming roller is rotatably arranged in one of the openings of the collecting box; and the grooming roller is provided with a plurality of dehairing brushes along an circumference of the grooming roller, hair removal brushes are arranged in the collecting boxes, and the dehairing brushes and the hair removal brushes are enabled to make contact by rotating the grooming roller.

9. The adjustable grooming structure of claim 8, wherein an outer side of the grooming roller is connected to a baffle in an axial direction of the grooming roller.

10. The adjustable grooming structure of claim 8, wherein the grooming roller is connected to plates of comb teeth, a plurality of comb teeth bent to the same side are connected to each of the plates of comb teeth, and the comb teeth are elastic.
